**Europäisches Patentamt**

**European Patent Office**

**Office européen des brevets**

(19)

(11) Veröffentlichungsnummer: **0 255 057 B1**

# EUROPÄISCHE PATENTSCHRIFT

(45) Veröffentlichungstag der Patentschrift: **28.08.91**

(21) Anmeldenummer: **87110722.3**

(22) Anmeldetag: **24.07.87**

(51) Int. Cl.5: **G01N 35/00**, G01N 35/02, G01N 31/22

(54) **Vorrichtung zum Benetzen von Teststreifen.**

(30) Priorität: **30.07.86 DE 3625683**

(43) Veröffentlichungstag der Anmeldung:
**03.02.88 Patentblatt 88/05**

(45) Bekanntmachung des Hinweises auf die
Patenterteilung:
**28.08.91 Patentblatt 91/35**

(84) Benannte Vertragsstaaten:
**AT BE CH DE ES FR GB IT LI NL SE**

(56) Entgegenhaltungen:
**DE-A- 2 437 332**

(73) Patentinhaber: **HOECHST AKTIENGESELL-
SCHAFT
Postfach 80 03 20
W-6230 Frankfurt am Main 80(DE)**

(72) Erfinder: **Gross, Jürgen, Dr.
Frankfurter Strasse 4
W-6238 Hofheim am Taunus(DE)**
Erfinder: **Sänger, Hans Dieter
Johann-Sittig-Strasse 1
W-6230 Frankfurt am Main 80(DE)**

## Beschreibung

Die Erfindung betrifft eine Vorrichtung zum Benetzen von Teststreifen mit mehreren Testfeldern, wie sie z. B. für medizinische Tests, insbesondere für die Untersuchung von Harn verwendet werden. Sie ist Teil einer Linie, die dem automatischen Zuführen, Sortieren, Benetzen und Einlegen von Teststreifen in eine Analysenapparatur, z.B. in ein Mehrkanalphotometer, dient.

Für die allgemein bekannte Harndiagnostik stehen sogenannte Mehrfachharnteststreifen zum Bestimmen von Bilirubin, Urobilinogen, Ketonkörper, Ascorbinsäure, Glucose, Protein, Nitrit, des pH-Wertes und Blut zur Verfügung. Derartige Teststreifen enthalten mehrere Testfelder, auf denen die dem jeweiligen Test zugehörenden Reagenzien als Indikator angeordnet sind. Die Teststreifen werden manuell mit Urin befeuchtet und anschließend in den Analysator eingelegt. Die Arbeit soll automatisiert werden. Hierfür ist u.a. eine Vorrichtung zum Benetzen der Teststreifen erforderlich.

Die Druckschrift DE-A1- 2 437 332 zeigt eine Vorrichtung zum Benetzen von Teststreifen mit mehreren Testfeldern.

Die Erfindung löst die Teilaufgabe dadurch, daß über einer Ablage für die Teststreifen eine Sprühvorrichtung parallel zum Teststreifen verschiebbar angeordnet ist, und die Sprüheinrichtung eine Breitschlitzdüse aufweist.

Bei stetiger Bewegung der Sprüheinrichtung über die Testfelder ist es zweckmäßig, die Sprüheinrichtung mit mindestens einer Absaugvorrichtung zu versehen, um überschüssige Flüssigkeit zwischen den einzelnen Testfeldern zu entfernen. Verzichtet man auf die Absaugvorrichtung, ist es zweckmäßig, die Sprüheinrichtung mit einem Schrittwerk zu versehen, das dafür sorgt, daß die Düse über jedem Testfeld kurzzeitig zum Stehen kommt. Das Schrittwerk kann mit einem Ventil verbunden sein, daß im flüssigkeitsführenden Teil der Sprüheinrichtung angeordnet ist.

Im folgenden wird die Erfindung anhand der Figuren näher erläutert, die beispielsweise Ausführungen darstellen. Es zeigt:

Figur 1 die Vorrichtung, deren Sprüheinrichtung mit einem Schrittwerk versehen ist, in Seitenansicht

Figur 2 die Vorrichtung gemäß Figur 1 isometrisch dargestellt

Figur 3 die Vorrichtung, deren Sprüheinrichtung sich stetig bewegt, in Seitenansicht und

Figur 4 die Vorrichtung gemäß Figur 3 in Draufsicht.

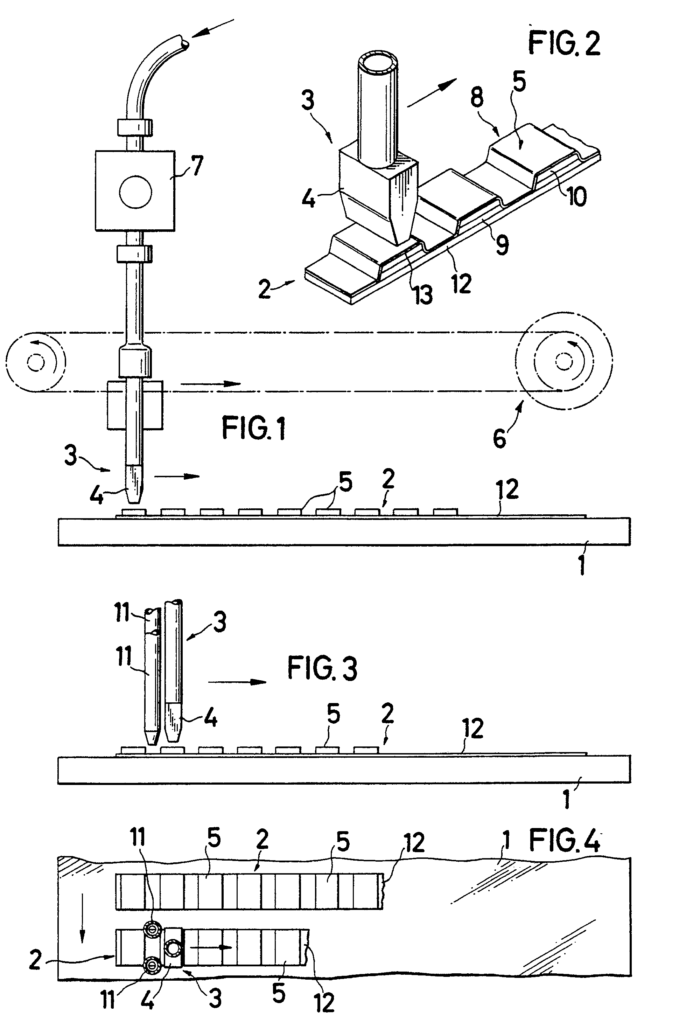

Bei der Vorrichtung zum Benetzen von Teststreifen ist über einer Ablage 1 für die Teststreifen 2 eine Sprüheinrichtung 3 angeordnet. Die Sprüheinrichtung 3 ist mit einer Breitschlitzdüse 4 versehen und kann parallel zum Teststreifen 2 verschoben werden, wobei die Düse die einzelnen Testfelder 5 überfährt. Bei schrittweiser Bewegung der Sprüheinrichtung gemäß Figur 1 ist die Sprüheinrichtung 3 mit einem Schrittwerk 6 versehen, das dafür sorgt, daß die Düse 4 jeweils über einem Testfeld 5 zu stehen kommt. Gleichzeitig wird ein Ventil 7 betätigt, das in der Zuleitung für die Flüssigkeit angeordnet sein kann. Das Ventil 7 kann mit dem Schrittwerk 6 mechanisch oder elektrisch verbunden sein. Die Breitschlitzdüse 4 ist zweckmäßig der Geometrie der Testfelder 5 angepaßt, damit Flüssigkeit an den Seiten 8 der Testfelder 5 von der saugfähigen Unterlage 9 für den Reagenzträger 10 aufgesaugt werden kann.

Bei stetigem Überfahren der Testfelder 5 muß dafür Sorge getragen werden, daß überschüssige Flüssigkeit zwischen den einzelnen Testfeldern entfernt wird. Hierfür kann die Sprüheinrichtung mit mindestens einer Absaugevorrichtung 11 versehen sein. Gemäß Figur 4 sind zwei Absaugevorrichtungen 11 vorgesehen. Der Teststreifen besteht in der Regel aus einem Träger 12, den Testfeldern 5 und einer netzartigen Abdeckung zum Schutz der Testfelder, wobei die seitlichen Bezirke 8 der Testfelder ungeschützt bleiben. Die Testfelder 5 können aus einer saugfähigen Unterlage 9 für den Reagenzträger und dem Reagenzträger 10 oder aus einem einlagigen Reagenzträger, der auf einer Trägerfolie aufgeklebt ist, bestehen.

## Patentansprüche

1. Vorrichtung zum Benetzen von Teststreifen mit mehreren Testfeldern, dadurch gekennzeichnet, daß über einer Ablage (1) für die Teststreifen (2) eine Sprüheinrichtung (3) parallel zum Teststreifen (2) verschiebbar angeordnet ist, und die Sprüheinrichtung (3) eine Breitschlitzdüse (4) aufweist.

2. Vorrichtung nach Anspruch 1, dadurch gekennzeichnet, daß die Sprüheinrichtung mit mindestens einer Absaugvorrichtung (11) zum Absaugen überschüssiger Flüssigkeit zwischen den einzelnen Testfeldern (5) versehen ist.

3. Vorrichtung nach Anspruch 1, dadurch gekennzeichnet, daß die Sprüheinrichtung (3) mit einem Schrittwerk (6) versehen ist, das dafür sorgt, daß die Breitschlitzdüse (4) über jedem Testfeld (5) kurzzeitig zum Stehen kommt, und mit einem Ventil für die Flüssigkeit verbunden ist, das im flüssigkeitsführenden Teil der Sprüheinrichtung (3) angeordnet ist.

## Claims

1. An apparatus for moistening test strips having several test zones, wherein a spray device (3) is arranged above a support (1) for the test strips (2) so as to be displaceable parallel to the test strip (2), and the spray device (3) has a wide-slit nozzle (4).

2. The apparatus as claimed in claim 1, wherein the spray device is equipped with at least one sucking-off device (11) for sucking off excess liquid between the individual test zones (5).

3. The apparatus as claimed in claim 1, wherein the spray device (3) is equipped with a stepping mechanism (6) which ensures that the wide-slit nozzle (4) comes to rest briefly above each test zone (5) and which is connected to a valve for the liquid arranged in the liquid-carrying part of the spray device (3).

**Revendications**

1. Appareil pour mouiller des bandes de test comportant plusieurs plages de test, caractérisé en ce qu'un dispositif de pulvérisation (3) est disposé mobile au-dessus d'une réception (1) pour les bandes de test (2), parallèlement à la bande de test (2), et comporte une buse plate ou à large fente (4).

2. Appareil selon la revendication 1, caractérisé en ce que le dispositif de pulvérisation est équipé d'au moins un dispositif d'aspiration (11) pour aspirer le liquide excédentaire entre les différentes plages de test (5).

3. Appareil selon la revendication 1, caractérisé en ce que le dispositif de pulvérisation (3) est équipé d'un mécanisme pas à pas (6) qui assure le bref arrêt de la buse plate (4) au-dessus de chaque plage de test (5) et est relié à une valve pour le liquide, laquelle est installée dans la partie d'alimentation en liquide du dispositif de pulvérisation (3).

FIG. 2

FIG.1

FIG. 3

FIG.4

4